# EUROPEAN PATENT APPLICATION

(11) **EP 4 382 870 A1**
(43) Date of publication of application: **12.06.2024**
(21) Application number: 22212120.4
(22) Date of filing: 08.12.2022
(51) Int. Cl.: G01D 5/347, G02B 1/18, G02B 27/00, B32B 33/00

(54) **ANTI-FOGGING INCREMENTAL SCALES FOR OPTICAL ENCODERS AND FABRICATION METHOD THEREOF**

(71) Applicant: Kaunas University of Technology, 44249 Kaunas (LT)
(72) Inventor: Grigaliunas, Viktoras, LT-49387 Kaunas (LT); Meskinis, Sarunas, LT-45485 Kaunas (LT); Jucius, Dalius, LT-49299 Kaunas (LT); Lazauskas, Algirdas, LT-45319 Kaunas (LT); Guobiene, Asta, LT-53332 Kaunas (LT); Abakeviciene, Brigita, LT-46383 Kaunas (LT); Juodenas, Mindaugas, LT-46326 Kaunas (LT); Gudaitis, Rimantas, LT-50154 Kaunas (LT); Vasiliauskas, Andrius, LT-51277 Kaunas (LT); Kasparaitis, Albinas, LT-03154 Vilnius (LT)
(74) Representative: Klimaitiene, Otilija

(57) **Abstract**

The present invention discloses a manufacturing method for anti-fogging incremental optical scales for rotary and linear displacement encoders. The fogging problem is very relevant for optical encoders as if the scale surface becomes fogged, the encoder stops working. The invention provides the scale device with the anti-fogging feature, and its fabrication method, which employs surface texturing and high surface energy diamond-like-carbon (DLC) coatings. The surface texture maintaining the optical transmittance of floated glass and inducing superhydrophilicity can be made using a parallel plate or ICP reactive ion etching process in the CF₄/ O₂ plasma. The non-fogging, transparent, hydrophilic, and wear-resistant DLC coating (5) can be grown by different deposition techniques, and the hydrophilicity of the coating (5) can be further increased by exposing the DLC coating surface to plasma, ion beam, or UV radiation. Such anti-fogging incremental scales enable the encoder to operate in a dew point environment.

## Description

### FIELD OF INVENTION

The present invention relates to measurements, optical measurements, and devices thereof. More specifically, the invention discloses a fabrication method of anti-fogging incremental optical scales for rotary and linear displacement encoders, and the anti-fogging scales device enables the use the displacement encoders in dew-point environments and conditions.

### BACKGROUND ART

Fogging of windows, glasses, screens, and other surfaces of various devices is a highly undesirable phenomenon that significantly affects optical transmission when a cold surface comes into contact with warm and humid air. The fogging problem is also very relevant for optical encoders operating on the principle of photoelectric scanning. Cr gratings from a few to tens of micrometers wide, with transparent slits between them, are fabricated on the surface of the encoder glass scales, and the changes in the intensity of light passing through the scale are converted into a periodic electrical signal. If the scale surface becomes fogged, the encoder stops working.

The U.S. patent No. US 6,750,445 describes the design of an optical encoder for measuring the rotational speed and rotational position of a rotary slit disc. This encoder has a special slit structure for preventing position precision at the high-speed operation from deteriorating. A fixed slit is used between the rotary slit disc and the light-receiving device. Light-receiving windows of the fixed slit are arranged at positions different in a radial direction of the rotary slit disc and have mutually different phases. The lengths of the light-receiving windows in the radial direction of the rotary slit disc are greater from the inner peripheral side toward the outer peripheral side so that the opening area of the light-receiving window on the inner peripheral side may be equal to that on the outer peripheral side. Therefore, the amount of light that the light-receiving elements receive can be made the same regardless of the position of the rotary disk. Accordingly, it is possible to prevent an increase in high-speed flutter arising due to fluctuations of the difference in the phase at high-speed operation or when performing multiplication using a bridging circuit. Also, even in a case where the rotational position is converted to digital signals by analog-digital conversion, it is possible to provide an encoder that enables better rotational precision over a wide range. However, the patented design does not provide any protection against fogging of the optical encoder.

The European patent application No. 94111237.7 (publication number EP0635700) discloses an encoding principle and apparatus which can yield a digital absolute angular or linear position reading without the need for a large number of parallel tracks. The apparatus to convert the absolute angular or linear position to digital information utilizes a rotating disk with a single track subdivided into several sectors. Multiple stationary sensors are placed at essentially equal intervals along the track. Extending the number of sensors, thus encoders with higher resolutions are possible. The output from the group of sensors is converted to binary format by combinatorial logic. The sensors may be mechanical contacts, optical, magnetic, or capacitive, and may distinguish two or more levels each. The principal feature of this encoder is the ability to encode the information on a single track, thus reducing the size of an embodiment utilizing the inventive approach. Another unique feature is the fact that the method preserves the Gray code property, i.e. only one bit of the digital value changes between the readings corresponding to two adjacent locations. When cooled below the dew point, the rotating disk can fog up and the measurements may be disturbed if optical sensors are used in this encoder.

European patent No. EP2902750 B1 describes a linear encoder, the entire size of which can be reduced by reducing the transverse lengths of a scale and a detection head without decreasing the measurement accuracy of the encoder. The detection head includes a movable member, such as a roller bearing, which ensures a smooth movement of the head along the longitudinal direction of the scale and also functions as a spacer to maintain a distance between the scale and the detection head. According to the patented configuration, the roller bearing does not make contact with the scale graduations even if the path of the bearing and the graduations are arranged close to each other, as the graduations are formed on a surface on one side of the scale, while the bearing abuts against a surface on the other side of the scale so that the scale can serve as a plate member. This makes it possible to overlap the path of the bearing and the graduations without damaging them. Since the scale serves as a plate member, it is possible to avoid adding a new member as well as to reduce the transverse lengths of the scale and the head in the linear encoder. The effect of humidity and fogging on the measurements is not covered in this patent.

Surface texturing techniques are known, for example, international patent application WO2010/129807 (PCT/US2010/033927) "Superhydrophilic Nanostructure" describes a superhydrophilic nanostructure that includes nanoparticles. Nanoparticles form porous clusters and aggregates on three different scales (individual particles, clusters, and aggregates), which dramatically increase the contact area of water. The result is superhydrophobic behaviour, where a cold surface brought into a warm and humid environment forms a continuous water film instead of fogging, i.e., anti-fogging behaviour. The patent also claims the manufacturing process, an embodiment of which involves depositing chemically or physically produced nanoparticles on a substrate and annealing, which forms said porous nanoparticle clusters and aggregates. An embodiment involves TiO₂ nanoparticles, which, as claimed, do not require light activation to provide superhydrophilic qualities. In addition, the claimed technology exhibits high optical transmittance over the range from UV to IR, very fast transition time (160 ms following the droplet deposition), and repeatability over more than 20 cycles. Our proposed texturing method differs in that superhydrophilic nanostructures are formed directly onto the glass surface using lithography and/or ion beam and/or plasmochemical treatment, i.e., no nanoparticles are required.

The Chinese patent CN105798363B "Processing method of hydrophilic micro patterns with controllable adhesive force" describes a micro-milling method to form hydrophilic patterns on an otherwise hydrophobic surface to achieve directional transportation, droplet pump-free transmission, and the like. The technique involves a CAM milling machine that mills structures into a hydrophobic surface that are >50 um in diameter and >10 um in depth. These contrasting structures force liquid droplets to adhere to them and never the surrounding hydrophobic surface, therefore it allows to achieve the control and transportation of liquid droplets as they will follow the milled structure. However, the structures formed by this method are relatively large and not suitable for the glass surface.

Further, there are disclosed various anti-fogging, transparent, mechanical-impact-resistant coatings on the market for the protection of lenses and various glass and plastic optical parts (EP3444641A1; EP3508889A1; US2018/0113297A1; US2019/0218327A1; US20190324341A1; FR3067970A1; CN108717213A; CN106835043A; CN109135487A). However, such coatings are not yet applied to optical scales, and polymer coatings dominate. Meanwhile, they are less scratch and wear-resistant than DLC coatings.

The patents described below relate to high-surface energy diamond-like-carbon DLC coatings.

Patent US5464721A describes an amorphous silicon photoreceptor that was coated with a DLC coating doped with nitrogen, oxygen, or any of the elements of Group III or Group V (e.g., B, Al, P, and N). The patent states that such a surface does not fog. However, in that patent, the coating was intended to prevent supply voltage fluctuations and wear on the metal parts of the device, not to protect the optical scales from fogging.

The US patent US7033649B2 discloses, that scratch-resistant hydrophilic anti-fogging coating can be fabricated by doping DLC with at least one polar inducing dopant(s) such as boron (B) and/or nitrogen (N). A polar-inducing dopant causes DLC to become more graphitic. In addition to that, polar-inducing dopants tend to cause the DLC inclusive layer to be more polar, which in turn increases surface energy and thus provides for a more hydrophilic coating. In the same patent, the DLC hydrophilicity was increased due to UV exposure. According to the patent, in such a way, a superhydrophilic DLC film can be fabricated. In the patent US6303225B1, the advancement of DLC hydrophilic properties was invented by doping with N and B. The optimal ratio of N to B should be approximately 2:1. In the patent US9670092B2, an anti-condensation layer on the glass window comprising silicon nitride and/or silicon oxynitride, a transparent conductive oxide, a film comprising silicon nitride and a film comprising at least one of zirconium oxide, zirconium nitride, aluminum oxide and aluminum nitride was invented. In that patent, hydrophilic DLC film can be deposited on the top zirconium oxide film to increase the mechanical durability of the anti-condensation layer. However, there are no patent documents or scientific papers on the deposition of hydrophilic DLC coatings on the textured surface of optical scales.

### SUMMARY OF INVENTION

**Problem.** The present invention solves the encoder scales fogging problem by employing new features and a new method for the production of incremental optical scales, where this method combines surface-texturing and high-surface-energy coatings, such as diamond-like-carbon (DLC) coatings.

**Solution.** The invention discloses the anti-fogging incremental optical scales used in rotary and linear displacement encoders. The proposed method of fabricating incremental optical scales solves the problem of fogging by forming a superhydrophilic surface where the microdroplets coalesce to form a single thin layer of liquid that provides sufficient optical transmittance to operate the encoder. The essence of the invention is that a new complex method for the production of incremental optical scales is proposed, which combines float-glass surface texturing and high-surface-energy DLC coatings. This method ensures that the produced scales and the encoder can operate in a dew-point environment.

The surface of a float-glass substrate (which is used for scale fabrication) is textured in a way that maintains optical transmittance and at the same induces superhydrophilicity by ensuring high-surface energy. The float-glass surface can be textured using a parallel plate or ICP reactive ion etching process in CF₄/ O₂ plasma. The float glass surface can be maskless or with an aluminum mask, patterned using the electron beam nano-lithography or other nano-patterning techniques and methods. The average roughness of the textured glass surface Rₐ can vary in the range from 2 to 20 nm, and the difference in height between the highest peak and the deepest valley on the surface Rt can be in the range from 10 to 100 nm.

The next stage of scale fabrication is the deposition of the reflective thin film (preferably, made of chromium (Cr)) on the textured floated-glass surface. The electron beam evaporation technique with the quartz-crystal thickness controller is used to deposit the Cr film with a thickness of 80 - 120 nm. Before the thin film deposition, the float glass substrate is heated (to 100 °C) in a vacuum chamber to improve the adhesion of the Cr film to the float glass.

The patterning process of a Cr-thin-film on the floated-glass substrate comprises the following steps: spin coating of the photoresist, photomask alignment, UV exposure, alkaline development, Cr chemical etching, deionized water rinse, and removal of the remaining resist film. As a result, the predetermined Cr patterns are fabricated onto the textured floated-glass substrate. Other metals, such as silver, aluminum, gold, copper, nickel, etc., can also be used instead of Cr, to produce the light-reflective surface of the scales.

Finally, to ensure additional long-term protection of the scale's surface against fogging, as well as surface resistance to scratches and wear, the optical scale is coated with a hydrophilic, transparent diamond-like-carbon (DLC) coating. Other hard and transparent anti-fogging coatings can be used instead of DLC, as suitable alternatives.

### DESCRIPTION OF DRAWINGS

The drawings are provided as a reference to possible embodiments and are not intended and should not limit the scope of the invention.

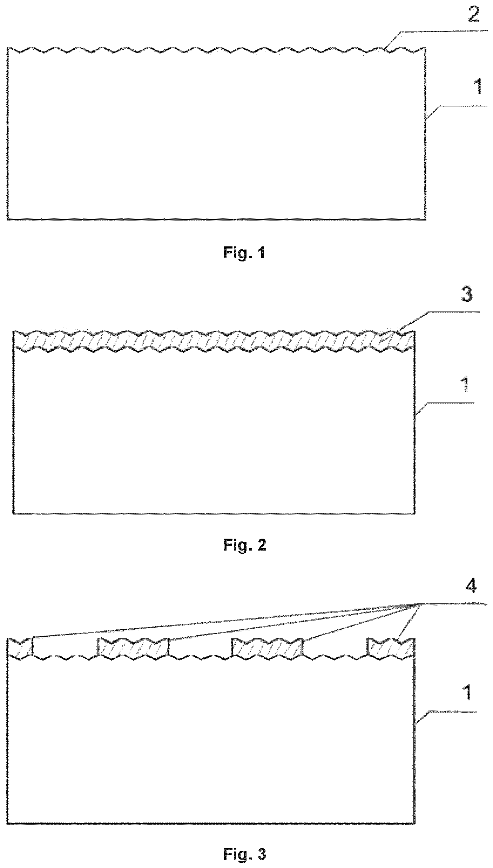

- **Figure 1**: shows a float glass substrate (1), the surface of which is uniformly textured with superhydrophilic nanostructures (2). The preferred average surface roughness Rₐ varies in the 4 - 6 nm range, and the preferred difference in height between the highest peak and the deepest valley Rt varies in the 20 - 50 nm range;
- **Figure 2**: shows a Cr film (3) evaporated on the textured floated-glass substrate (1). The thickness of the Cr film varies in the 80 - 120 nm range;
- **Figure 3**: shows several-micrometers-wide reflecting layer (chromium, Cr) gratings (4) of the scale pattern, with transparent floated-glass substrate (1) slits in between the gratings (4);
- **Figure 4**: shows the final structure of the encoder's glass scale, which is coated with a protective and superhydrophilic DLC coating (5), having superhydrophilic nanostructures (2) of the surface. The thickness of the DLC coating varies in the 80 - 120 nm range;
- **Figure 5**: shows the picture of the encoder's glass scale.

### DETAILED DESCRIPTION OF INVENTION

Abbreviations used in the description:
DLC - diamond-like-carbon;
Cr - chromium;
UV - ultraviolet;
IR - infrared;
TiO₂ - titanium dioxide;
SiO₂ - silicon dioxide.
SiNs - silicon nitride;
CAM - computer-aided manufacturing;
B - boron;
Al - aluminum;
P - phosphorus;
N - nitrogen;
CF₄ - carbon tetrafluoride;
O2 - oxygen gas;
SiF₄ - silicon tetrafluoride;
CO - carbon monoxide;
CO₂ - carbon dioxide;
COF₂ - carbonyl fluoride;
SiOF₂ - silicon oxyfluoride;
ICP - inductively coupled plasma;
RF - radio frequency;
DC - direct current;
EB - electron beam;
RIE - reactive ion etching;
MIBK - methyl-isobutyl-ketone;
IPA - isopropyl alcohol.

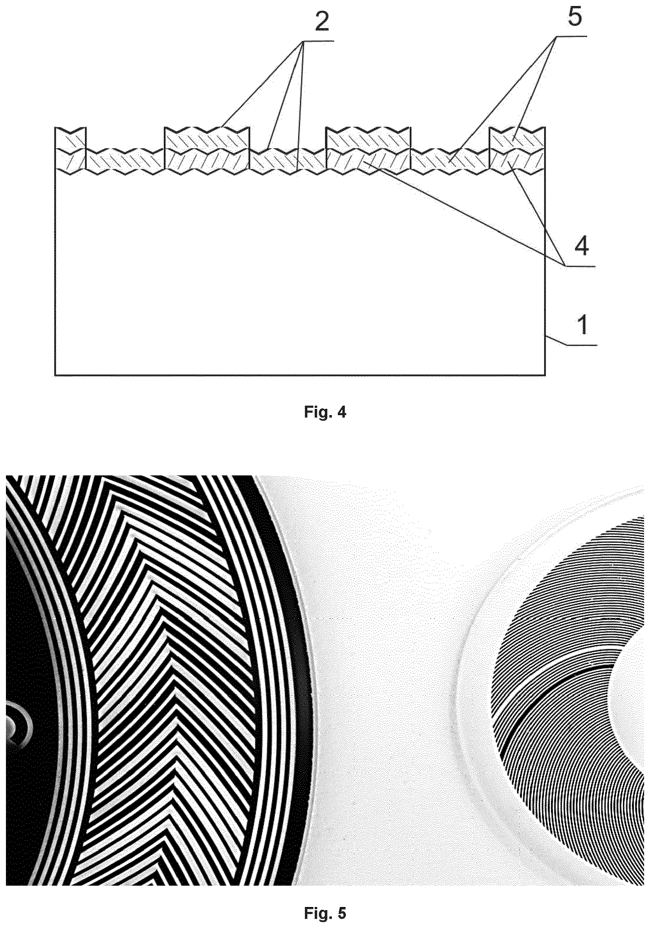

**Anti-fogging incremental scales.** According to the present invention, the anti-fogging incremental scales is a device comprising known incremental scales for optical encoders, where the scales further comprise a surface specifically processed to reduce the fogging effect. One structural feature of the device is that the surface of the scale device has a nano-dimensional roughness texture (2). The cross-section of the layered structure of the device is presented in Figure 4. The first layer (1) is the floated-glass layer, the surface of which is etched for nano-roughness texture, but the etched glass still preserves the transparency of the light. Further, the reflecting layer (3) or its gratings (4) as partial reflecting areas of the scales covers the etched glass (1) surface, still preserving the nano-roughness and also providing the reflecting layer patterned for the encoder application. Further, the protective layer (5) is coated on top of the glass (1) surface and the patterned reflecting layer (4). The protective layer (5) also preserves the nano-roughness texture on its surface. Therefore, the scales device comprises its surface nano-roughness in combination with a hard and transparent protective layer, where this combination provides the encoder scales wear-resistant and ant-fogging effect.

**Method of scale fabrication.** The first step in the fabrication of anti-fogging incremental scales is texturing the surface of a float glass substrate (1), to induce hydrophilicity. A nanostructure-textured superhydrophilic surface (2) with a water contact angle of less than 5 degrees can be fabricated in several ways:
**I. CF₄/O₂ plasma etching in a parallel plate reactor.** Several processes could take a place in a pure carbon fluoride plasma. Along with the etching of glass, CFₓ groups adsorb on the surface and form a polymer film. This process is usually undesirable because it inhibits the etching rate and creates surface roughness. Adding a small amount of oxygen produces a fluorine-saturated plasma and etches away the forming polymer film, thus minimizing the possibility of polymerization on the float glass (1) surface. In a carbon fluoride plasma, glass is slowly chemically etched by volatile SiF₄, CO, CO₂, COF₂, and SiOF₂ compounds, without surface bombardment with energetic particles. In the absence of bombardment, a smoother nanostructured superhydrophilic surface is fabricated, which almost does not reduce the optical transmittance of the textured glass.
**II. ICP RIE process in the CF₄/O₂ plasma.** High-density plasma is generated because of the inductive coupling between an RF antenna and the plasma. The antenna creates an alternating RF magnetic field in the plasma generation region and induces RF electric fields, which contribute to the ionization of gas molecules and atoms. The main difference between ICP reactive ion and plasma chemical etching is the separate ICP source connected to the cathode that generates DC bias and attracts ions to the surface of the etching substrate. The ICP RIE process provides higher etching rates.
**III. ICP RIE process in the CF₄/O₂ plasma using a nanostructured aluminum mask.** The aluminum mask on the float glass substrate (1) is fabricated in a few steps: 1 - an auxiliary aluminum film with a thickness of 40 - 60 nm is deposited on the float glass substrate (1) using the EB evaporation technique; 2 - EB resist with a resolution of about 30 nm is spin-coated on the top of the aluminum layer at 4000 - 5000 rpm and dried for 3 - 5 minutes at 140 - 180 °C on a hotplate (EB resist film thickness can vary from 50 to 200 nm); 3 - EB resist is directly patterned with a two-dimensional array of holes throughout (diameter of holes is 50 - 200 nm); 4 - EB resist is developed in a mixture of 1:3 MIBK:IPA; 5 - the aluminum film is etched with ceric ammonium nitrate-based etchant, followed by deionized water rinse; 6 - EB resist is washed away with acetone. Then the float glass is etched using the ICP RIE process in the CF₄/ O₂ plasma and, finally, the aluminum mask used is etched away with a ceric ammonium nitrate-based etchant. As a result, a textured float glass surface (2) with superhydrophilic properties is manufactured.

The second step in the fabrication of anti-fogging incremental scales is the deposition of the light-reflecting material (preferably, and in this example, chromium, Cr) thin film (3) onto the textured float glass substrate (1). This step is carried out using the EB evaporation technique. EB evaporation is a physical vapour deposition process that employs a magnet to focus on accelerated electrons to form a high kinetic energy electron beam (EB). This EB is directed to a crucible that contains Cr ingots. Cr is melted, and then it begins to evaporate. Metal vapours coat the float glass substrate (1). The thickness of the deposited film (80 - 120 nm) is measured *in situ* by a quartz crystal controller. The float glass substrate (1) in the vacuum chamber is heated to 100°C to improve the adhesion of the Cr-film (3) to the textured surface (2) of the float glass substrate (1). The EB evaporation allows precise control of the thickness, structure, and morphology of the Cr-film (3). The EB evaporation process forms a dense coating with a low level of contamination.

During the next step, a photomask alignment and exposure system are used to pattern the thin Cr film (3). A highly-collimated light source provides near-UV (i-line, 365 nm) radiation. The resist-coated float glass substrate (1) is brought into physical contact with a glass photomask with a scale pattern. The positive photoresist becomes soluble in an alkaline developer after exposure. Development can be done in a spinner or a bath. Metal-ion-free developers, such as tetramethylammonium hydroxide, or metal-ion-containing developers, such as potassium hydroxide or sodium hydroxide, can be used, depending on the photoresist formulation. Cr film (3) is etched after development using a ceric ammonium nitrate-based etchant with an etch rate of 4 nm/sec at room temperature, followed by a deionized water rinse. The remaining resist film is removed to obtain predetermined Cr patterns (4).

The final step in the fabrication of anti-fogging incremental scales is the deposition of the non-fogging, transparent, hydrophilic, and resistant to scratches and wear DLC coating (5) with a thickness of 80 - 120 nm. The DLC coating (5) may comprise only diamond-like-carbon and graphite-like-carbon atoms, in other embodiments, it may also contain hydrogen atoms. Furthermore, the hydrophilicity of the DLC coating (5) can be increased by doping the DLC film with increasing surface polarity impurities (N, B, P, ao.). The hydrophilicity of the DLC-coating (5) can also be increased by doping with Si, SiO₂, or SiNs. DLC coating (5) can be grown by a variety of plasma-activated deposition techniques, including plasma-activated chemical vapour deposition, ion beam deposition, magnetron sputtering, arc evaporation, or laser ablation. The hydrophilicity of the DLC coating (5) can be further increased by exposing the surface to oxygen or nitrogen-containing plasma, ion beam, or UV radiation.

Although numerous characteristics and advantages together with structural details and features have been listed in the present description of the invention, the description is provided as an example of the fulfillment of the invention. Without departing from the essential principles and features of the invention, there may be changes in the details, especially in the form, size, and layout, by the most widely understood meanings of the concepts and definitions used in claims.

## Claims

1. An optical-encoder-incremental-scales device, comprising at least
- a substrate layer (1), preferably, a floated-glass layer,
- a reflective nano-thickness layer (4) of the scales-pattern, on the surface of the substrate (1),
w her e i n the device further comprises at least
- a transparent and wear-resistant protective layer (5) on the surface of the substrate layer (1) and the patterned reflective layer (4), wherein at least the protective layer (5) has a nano-dimensional roughness texture (2) for hydrophilicity of the scales surface.

2. The device according to claim 1, **wherein** the surface nano-dimensional morphology roughness of at least the protective layer (5) is within the 4 - 6 nm range, and the difference in height between the highest peak and the deepest valley Rt is in the 20 - 50 nm range.

3. The device according to any of claims 1 to 2, **wherein** the protective layer (5) thickness varies in the 80 - 120 nm range.

4. The device according to any of claims 1 to 3, **wherein** the protective layer (5) is diamond-like-carbon DLC coating, or the DLC coating comprising graphite-like-carbon atoms, or the DLC coating comprising hydrogen atoms, or the DLC coating comprising any of dopped N, B, P, Si, SiO₂, or SiNs impurities for an increase of the hydrophilicity of the scales surface.

5. The device according to any claims 1 to 4, **wherein** the reflective layer (4) thickness varies in the 80 - 120 nm range.

6. The device according to any of claims 1 to 5, **wherein** the reflective layer (4) is any one of chromium, silver, aluminum, gold, copper, nickel, and preferably, chromium.

7. A method of fabricating the anti-fogging incremental scales for optical encoders, the method comprising steps of:
• texturing of the float glass substrate (1) to maintain optical transmittance and induce surface-superhydrophilicity, preferably, with the average roughness of the textured glass surface Rₐ varying in range from 2 to 20 nm, and the height difference between the highest peak and deepest valley on the surface Rt is in the range from 10 to 100 nm;
• depositing a thin reflective film (4), preferably chromium Cr, with a thickness of nanometer range, onto the textured floated-glass surface (2);
• producing a predetermined patterning of the reflective film (4) for the encoder scale applications;
• depositing a transparent, hydrophilic, wear-resistant protective layer (5), preferably, a diamond-like-carbon DLC coating (5) with a thickness of nanometer range.

8. The method according to claim 7, wherein the anti-fogging incremental scales for optical encoders are produced by combining texturing of the float glass substrate (1) and deposition of the transparent, hydrophilic, and wear-resistant DLC coating (5) on the top of the substrate (1).

9. The method according to claim 7, wherein the preferred thickness of the reflective film (4) is in the range from 80 to 120 nanometers.

10. The method according to claim 7, wherein the preferred thickness of the transparent, hydrophilic, wear-resistant protective layer (5) is in the range from 80 to 120 nanometers.

11. An optical encoder comprising anti-fogging incremental scales according to claims 1 to 6.
